(19) **Europäisches Patentamt / European Patent Office / Office européen des brevets**

(11) **EP 3 291 141 B1**

(12) # FASCICULE DE BREVET EUROPEEN

(45) Date de publication et mention de la délivrance du brevet:
**24.07.2019 Bulletin 2019/30**

(51) Int Cl.:
**G06K 9/00** *(2006.01)*      **G06K 9/46** *(2006.01)*
**G06Q 30/06** *(2012.01)*      *G06Q 40/04* *(2012.01)*

(21) Numéro de dépôt: **17189487.6**

(22) Date de dépôt: **05.09.2017**

(54) **PROCÉDÉ DE RECONNAISSANCE DE CARACTÈRES EN RELIEFS, PRODUIT PROGRAMME D' ORDINATEUR ET DISPOSITIF CORRESPONDANTS**

VERFAHREN ZUR ERKENNUNG VON RELIEFARTIG HERVORSTEHENDEN ZEICHEN, ENTSPRECHENDES COMPUTERPROGRAMMPRODUKT UND ENTSPRECHENDE VORRICHTUNG

METHOD FOR RECOGNISING RAISED CHARACTERS, CORRESPONDING COMPUTER PROGRAM PRODUCT AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2016 FR 1658228**

(43) Date de publication de la demande:
**07.03.2018 Bulletin 2018/10**

(73) Titulaire: **INGENICO GROUP**
**75015 Paris (FR)**

(72) Inventeurs:
• **QUENTIN, Pierre**
  **95880 ENGHIEN LES BAINS (FR)**
• **GERAUD, Rémi**
  **75018 PARIS (FR)**

(74) Mandataire: **Vidon Brevets & Stratégie**
**16B, rue de Jouanet**
**BP 90333**
**35703 Rennes Cedex 7 (FR)**

(56) Documents cités:
**FR-A1- 2 607 288      JP-A- 2004 178 529**
**JP-A- 2006 221 431      US-A1- 2012 294 534**

• **JIANMEI LI ET AL: "Contrast enhancement for images of raised characters on region of interest", INTELLIGENT CONTROL AND AUTOMATION (WCICA), 2010 8TH WORLD CONGRESS ON, IEEE, PISCATAWAY, NJ, USA, 7 juillet 2010 (2010-07-07), pages 6258-6261, XP031736890, ISBN: 978-1-4244-6712-9**
• **MANCAS-THILLOU ET AL: "Color text extraction with selective metric-based clustering", COMPUTER VISION AND IMAGE UNDERSTANDING, ACADEMIC PRESS, US, vol. 107, no. 1-2, 1 juin 2007 (2007-06-01), pages 97-107, XP022103083, ISSN: 1077-3142, DOI: 10.1016/J.CVIU.2006.11.010**

EP 3 291 141 B1

**Description**

**1. Domaine**

La présente technique se rapporte à la reconnaissance optique de caractères (OCR : *« optical character récognition »* en anglais). Plus précisément, la présente technique concerne la reconnaissance optique de caractères en reliefs. La présente technique s'applique en particulière à la lecture des caractères en relief sur des supports physiques comme par exemple une carte bancaire.

**2. Art Antérieur**

Le commerce électronique devient de plus en plus incontournable dans la vie quotidienne. On connaît plusieurs modes de paiement pour effecteur les achats en lignes, par exemple, par carte bancaire, par un service intermédiaire tel que « *Paypal* » ou par un virement bancaire. Parmi les modes de paiement connus, le paiement par carte bancaire est le plus répandu et proposé par presque tous les sites de commerce en ligne.

Lorsqu'un utilisateur achète des biens avec sa carte bancaire sur un site internet, il est nécessaire de fournir les informations de sa carte bancaire. Les informations peuvent comprendre par exemple un numéro de la carte (PAN « *Primary Account Number* ») de seize chiffres, une date d'expiration, un nom du titulaire de la carte et un code de vérification (CVC de MasterCard ou CVV de carte Visa). L'utilisateur doit lire toutes ces informations et les entrer manuellement sur une page web afin d'effectuer le paiement en ligne. La lecture visuelle et la saisie manuelle des informations sont complexes et susceptibles d'être affecté par des erreurs humaines qui auraient pour conséquence la perte en volume des ventes.

Il a été proposé d'implémenter une technique OCR classique pour lire les informations pertinentes sur la carte et les entrer automatiquement sur la page web à la place de l'utilisateur. La technique OCR est adaptée pour reconnaître les textes standards, qui sont imprimés à l'encre noire sur un papier plat. Cependant, elle essuie un échec spectaculaire lorsqu'il s'agit de la lecture les informations sur une carte bancaire. En effet, les informations sur une carte bancaire sont en reliefs (selon la norme ISO/IEC 7812) avec un estampage à chaud (« *foil stamping* » en anglais) afin de faciliter la lecture des utilisateurs. Par conséquent, l'apparence des lettres et des chiffres en reliefs est très différente de celle des lettres et des chiffres imprimés à l'encre noire sur un papier plat et blanc. La technique OCR classique, qui est adaptée pour reconnaître les caractères imprimés sur un papier plat et blanc, n'est ainsi pas en mesure de reconnaître des caractères en reliefs. Par ailleurs, le fond d'une carte bancaire est souvent richement coloré et décoré. En sus, avec le temps et l'usage, l'encre qui est apposée sur les caractères de la carte bancaire tend à disparaître. Il est dès lors très difficile de distinguer un quelconque caractère sur la carte. Ceci pose des problèmes supplémentaires à la technique OCR classique.

L'application « *card.io* » propose une solution implémentant la technique OCR classique pour reconnaître les caractères en reliefs sur une carte bancaire à partir d'une image capturée par une caméra. Toutefois, à cause du problème relatif aux caractères en reliefs, cette solution nécessite des conditions spécifiques d'éclairage, par exemple, l'éclairage par le flash d'un appareil photo ou d'un téléphone mobile. Ceci diminue rapidement la charge de la batterie de l'appareil photo ou du téléphone mobile. De plus, parfois l'application ne parvient même pas à un résultat fiable et/ou à un délai de réponse acceptable. Un exemple dans l'art antérieur est le document JIANMEI LI ET AL: "Contrast enhancement for images of raised characters on region of interest", INTELLIGENT CONTROL AND AUTOMATION (WCICA), 2010 8TH WORLD CONGRESS ON, IEEE, PISCATAWAY, NJ, USA, 7 juillet 2010 (2010-07-07), pages 6258-6261, XP031736890, ISBN: 978-1-4244-6712-9.

Il est donc nécessaire de trouver une solution permettant de reconnaître des caractères en reliefs de manière rapide et fiable sans imposer des conditions spécifiques d'éclairage lors de la capture de l'image des caractères en reliefs.

**3. Résumé**

La technique proposée ne présente pas le problème de l'art antérieur. Plus particulièrement, la technique proposée se rapporte à un procédé de reconnaissance de caractères, procédé mis en oeuvre par l'intermédiaire d'un dispositif électronique, procédé du type consistant à reconnaître, dans une image représentative d'un objet comprenant au moins un caractère en relief, dite image de base, au moins un caractère en relief de ladite image de base.

Un tel procédé comprend :

- une phase de traitement d'au moins une image, ladite phase comprenant au moins une mise en oeuvre d'un modèle réflectif de *Phong* et délivrant au moins une image d'identification ;
- une phase d'identification de caractères en fonction de l'image de base et de ladite au moins une image d'identification.

Selon une caractéristique particulière, ladite phase de traitement de ladite au moins une image comprend une étape de construction d'une carte de normales, représentant des normales des points sur au moins une zone de l'image de base, délivrant ladite image d'identification.

À la différence d'une image de base, la carte de normales ne comprend plus les informations relatives à la luminance et aux couleurs. L'identification des caractères est ainsi plus simple et fiable.

Selon une caractéristique particulière, ladite phase de traitement de la dite au moins une image comprend une étape de génération, préalable ou à la demande, par le modèle de *Phong,* des images modèles de caractères en reliefs selon une pluralité de conditions d'éclairage prédéterminées, délivrant une pluralité d'ensembles d'images de référence ; et ladite phase d'identification comprend :

- une étape de comparaison d'au moins certaines portions de l'image de base avec au moins certaines des images de référence, délivrant une liste d'images de référence sélectionnées, dite liste d'images d'identification, qui correspondent aux caractères dans l'image de base ; et
- une étape de de reconnaissance des caractères de l'image de base de la carte bancaire à l'aide de la liste d'images d'identification.

Selon une caractéristique particulière, les caractères en reliefs sont sur une carte bancaire dans ladite image de base.

Ainsi, les caractères sur la carte bancaire peuvent être reconnus par le procédé, sans nécessiter une lecture visuelle et une saisie manuelle par un utilisateur.

Selon une caractéristique particulière, le procédé comprend une phase de traitement préliminaire d'une image de la carte bancaire capturée par une caméra, délivrant ladite image de base.

Selon une caractéristique particulière, ladite phase de traitement préliminaire comprend :

- détection de bords de la carte bancaire, délivrant une image intermédiaire ;
- sélection de lignes dans l'image intermédiaire ;
- calcul des intersections des lignes, délivrant quatre coins de la carte bancaire ; et
- transformation de l'image intermédiaire, de sorte que les quatre coins coïncident avec quatre coins d'un rectangle, délivrant ladite image de base.

Ainsi, la phase de traitement préliminaire permet améliorer la qualité de l'image capturée. Les caractères sur la carte bancaire dans l'image de base sont plus facilement reconnus.

Selon une caractéristique particulière, l'étape de construction comprend :

- une étape d'identification d'une zone plane de ladite carte bancaire sur ladite image de base ;
- une étape de détermination d'une condition d'éclairage à partir d'une intensité lumineuse d'un pixel ou d'un groupe de pixels sur la zone plane de la carte bancaire ;
- une étape de calcul de normales desdits points de ladite au moins une zone selon la condition d'éclairage déterminée.

Ainsi, la condition de lumières est déterminée à l'aide d'une surface plane de la carte bancaire. La carte de normales peut être déterminée de manière simple et fiable.

Selon une caractéristique particulière, l'étape de détermination et l'étape de calcul utilisent l'équation suivante selon le modèle d'illumination de *Phong :*

$$I_P = k_a i_a + \sum_m (k_d \left( \hat{L}_m \cdot \hat{N} \right) i_{m,d} + k_s (\hat{R}_m \cdot \hat{V})^{\alpha} i_{m,s})$$

dans laquelle :

- $k_a \in [0,1]$ est une constante liée à la composante ambiante ;
- $k_d \in [0,1]$ est une constante liée à la composante diffuse ;
- $k_s \in [0,1]$ est une constante liée à la composante spéculaire ;
- $\alpha \gg 1$ est une constante liée à la brillance du matériau ;
- m est le nombre de sources lumières ;
- $I_P$ représente une intensité réfléchie totale sur un point donnée ;
- $\hat{L}$ est un vecteur directeur de la lumière ;
- $\hat{N}$ est un vecteur directeur de la normale à la surface ;

- $\hat{R}$ est un vecteur directeur de la direction dans la quelle serait réfléchie la lumière sur un miroir, $\hat{R} = 2(\hat{L} \cdot \hat{N})\hat{N} - \hat{L}$.

Selon une caractéristique particulière, ladite étape de calcul comprend les étapes suivantes :

- identification d'une valeur minimale des pixels de ladite au moins une zone de ladite image de base ;
- déduction de ladite valeur minimale sur les valeurs des pixels de ladite au moins une zone.

Ainsi, la composante ambiante est éliminée. Le calcul des normales des points de la zone cible est simplifié.
Selon une caractéristique particulière, ladite phase d'identification desdites caractères comprend :

- une étape de découpage de ladite carte de normales, délivrant une liste de sections de ladite carte de normales, chaque section correspondant à un caractère dans ladite au moins une zone ;
- une étape de construction d'une liste de vecteurs courants à partir de ladite liste de sections, chaque vecteur courant représentant une section ;
- une étape de comparaison desdits vecteurs courants avec une liste de vecteurs modèles préalablement construite à partir des cartographes normales des caractères connus, chaque vecteur modèle correspondant à un caractère connu ;
- une étape de détermination d'une liste de caractères courants correspondant à ladite liste de vecteurs courants.

La comparaison des vecteurs est plus simple à réaliser. Il suffit de calculer une distance entre deux vecteurs. La phase d'identification des caractères est ainsi simplifiée.
Selon une caractéristique particulière, lesdits caractères connus comprennent des lettres en majuscule A à Z de l'alphabet latin et les dix chiffres arabes 0 à 9.
Ainsi, la liste des vecteurs modèles correspond seulement aux caractères fréquents. Il n'est pas nécessaire de construite une grande liste de vecteurs modèles. L'étape de comparaison est aussi simplifiée car le nombre de vecteurs modèles est réduit.
Selon une caractéristique particulière, lesdits vecteurs courants et lesdits vecteurs modèle sont de m × n en dimensions, chacune desdits cartes de normales des caractères connus ayant une taille de m × n pixels.
Selon une caractéristique particulière, ladite au moins une zone comprend une zone d'un numéro ladite carte bancaire, et en ce que ladite liste de caractères courants comprend ledit numéro de ladite carte bancaire.
Selon une caractéristique particulière, ledit procédé comprend en outre une étape de vérification dudit numéro de ladite carte bancaire selon la formule de *Luhn.*
Ainsi, il est possible de vérifier la validité des chiffres d'un numéro de carte bancaire déterminée par le procédé.
Selon un autre aspect, l'invention se rapporte aussi, à un dispositif électronique de reconnaissance de caractères, dispositif électronique du type comprenant des moyens de reconnaissance, dans une image représentative d'un objet comprenant au moins un caractère en relief, dite image de base, au moins un caractère en relief de ladite image de base.
Un tel dispositif comprend :

- des moyens de traitement d'au moins une image, ladite phase comprenant au moins une mise en oeuvre d'un modèle réflectif de *Phong* et délivrant au moins une image d'identification ;
- des moyens d'identification de caractères en fonction de l'image de base et de ladite au moins une image d'identification.

Selon une implémentation spécifique, les différentes étapes des procédés selon l'invention sont mises en oeuvre par un ou plusieurs logiciels ou programmes d'ordinateur, comprenant des instructions logicielles destinées à être exécutées par un processeur d'un dispositif informatique, tel qu'un terminal, selon l'invention et étant conçu pour commander l'exécution des différentes étapes des procédés.
En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.
Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.
L'invention vise aussi un support d'informations lisible par un processeur de données, et comportant des instructions d'un programme tel que mentionné ci-dessus.
Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (« floppy disc ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus ainsi que les caractéristiques qui les composent sont combinables entre eux pour la mise en oeuvre de l'invention. Par exemple, la présente technique peut tout aussi bien être mise en oeuvre sur tout type de support qui comprend des caractères embossés et n'est nullement limitée à la carte bancaire.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :

- la figure 1 illustre les phases du procédé de reconnaissance de caractères en relief selon la technique proposée ;
- la figure 2 illustre les étapes d'une phase de traitement préliminaire d'une image de la carte bancaire capturée par une caméra ;
- la figure 3 illustre le changement de l'image de la carte bancaire capturée dans la phase de traitement préliminaire ;
- la figure 4 illustre l'apparence des caractères en reliefs sur une carte bancaire calculée selon les conditions de lumières connues ;
- la figure 5 illustre une surface plane et une zone de texte en reliefs sur une carte bancaire standard ;
- la figure 6 illustre les étapes de la phase de construction d'une carte de normales ;
- la figure 7 illustre les étapes de la phase d'identification des caractères ;
- la figure 8 illustre six images du chiffre « 0 » en relief restituées selon six conditions de lumières différentes ;
- la figure 9 illustre une structure simplifiée d'un dispositif de reconnaissance de caractères en relief selon la technique proposée.

### 5. Description détaillée

5.1. Principe général

Comme explicité précédemment, les logiciels de reconnaissance de caractères ont beaucoup de difficulté à reconnaître les caractères imprimés en reliefs, que ce soit sur les cartes bancaires ou sur d'autres supports (panneau de signalisation, enseignes, etc.). D'une manière générale, le traitement informatisé d'une image pour γ reconnaître une forme ou des caractères pose des problèmes dès que les conditions d'éclairages sont mauvaises. La présente technique, au contraire, permet de tirer astucieusement partie des conditions d'éclairage pour faciliter la reconnaissance de caractères imprimés en relief (caractères alphabétiques, numériques ou encore caractères en braille). Dans la suite, on s'attache essentiellement à décrire un processus de reconnaissance sur carte bancaire, mais il est bien évident que la présente technique peut être appliquée à de nombreux autres domaines, et notamment la reconnaissance de caractères en brailles.

Le principe général repose sur une méthode de construction basée notamment sur le modèle réflectif de *Phong*. Cette méthode est mise en oeuvre pour permettre la reconnaissance des caractères en relief. Plus particulièrement, dans un premier mode de réalisation, la méthode de construction est appliquée sur une image de base comprenant des caractères à reconnaître et elle permet de construire une image dérivée (appelée carte de normale) comprenant les caractères à reconnaître sous une forme plus aisément reconnaissable (i.e. l'image n'est plus en relief). Dans un deuxième mode de réalisation, une méthode de construction est appliquée sur une série de caractères, en fonction de conditions d'éclairage déterminées, afin de produire des images de références des caractères (des images de synthèse) en relief, les images de référence étant ensuite utilisées pour identifier des caractères à reconnaître dans une image de base.

L'utilisation de l'un et/ou l'autre de ces modes de réalisation (ou de certaines caractéristiques de ces modes de réalisation) pour effectuer la reconnaissance est rendu possible par plusieurs facteurs. Un des facteurs réside dans la connaissance, a priori, de l'épaisseur des caractères en relief (ou embossés) à reconnaître. Que ce soit pour les caractères des cartes bancaires ou encore pour les caractères ou les mots en braille, des normes édictent une épaisseur de ces caractères. Pour la carte bancaire, cette épaisseur normalisée de l'embossage permet d'assurer l'insertion de la carte dans les lecteurs de carte par exemple : chaque caractère embossé a donc une épaisseur maximum constante et connue. Par ailleurs, un autre facteur connu est la planéité de la surface se situant en dehors des caractères (par exemple la surface d'une carte bancaire est plane, tout comme la surface d'un texte en braille). Comme cela est décrit par la suite, ces deux facteurs permettent de déterminer une carte de normales (ou d'altitude), qui est ensuite utilisée pour reconnaître les caractères plus aisément.

Ainsi, dans le premier mode de réalisation, on effectue une construction d'une carte de normales (« *normal map* » en anglais) représentant des normales des points sur une zone cible comprenant des caractères en relief dans une image de base. Un point dans une image correspond à un pixel de l'image. Chaque pixel de la carte de normales est en réalité un vecteur fournissant l'information d'élévation et d'inclinaison de sa surface, c'est-à-dire, de la surface du texel sur lequel sera appliquée la carte de normales. Les caractères dans la zone cible peuvent être identifiés à partir de la carte de normales (ou d'altitude). En effet, la carte de normales permet de caractériser les formes des caractères en reliefs sur une zone cible. L'identification des caractères à partir des formes des caractères en reliefs est plus facile et rapide car une carte de normales (à la différence d'une image de base) ne comprend plus les informations relatives à la luminance et aux couleurs. Les caractères identifiés par le procédé selon la technique proposée sont ainsi plus fiables. Dans la solution de l'état de la technique, l'identification des caractères est réalisée à partir d'une image (photo) sur laquelle sont capturés des caractères en reliefs (sur une carte bancaire par exemple). Les informations relatives à la luminance et aux couleurs de l'image compliquent et ralentissent le processus d'identification, et rendent le résultat peu fiable.

L'image de base peut être une photo d'un objet (un support physique) comprenant des caractères en relief. La photo peut être capturée par tout dispositif (e.g. un appareil photo, un Smartphone, une tablette telle qu'un *iPad®* etc.) comprenant une caméra. Selon un autre mode de réalisation, cette image de base peut résulter d'une phase de traitement préliminaire d'une photo capturée. Ce traitement préliminaire comprend tout type d'opérations pour retoucher la photo (le découpage, la rotation, l'ajustement de paramètres, la déformation etc.) et délivre une image de base. La phase de construction peut ainsi être réalisée à partir d'une image plus fiable et adaptée pour la reconnaissance optique.

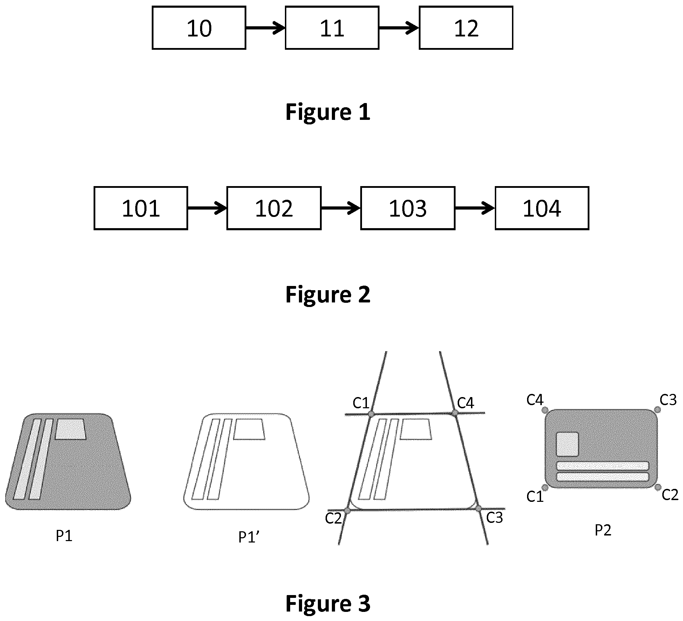

D'une manière générale, comme illustré en relation avec la figure 1, quel que soit le mode de réalisation retenu pour effectuer la reconnaissance des caractères, il est proposé un procédé de reconnaissance de caractères en relief dans une image de base, comprenant :

- une phase de traitement préliminaire 10 d'une image (P1) d'un objet comprenant des caractères en relief : cette phase de traitement préliminaire transforme l'image (P1) en un format standard et exploitable, dit image de base (P2). Ce traitement permet d'améliorer la précision et la fiabilité du procédé global ; cette phase de traitement préliminaire peut être optionnelle, en particulier lorsque la qualité de l'image capturée est satisfaisante ;
- une phase de traitement 11 d'au moins une image, comprenant une mise en oeuvre d'un modèle réflectif de *Phong ;*
- une phase d'identification 12 de caractères en fonction de l'image de base et de la phase de traitement précédemment réalisée.

Lorsque le modèle de *Phong* traite l'image de base, tel qu'évoqué dans le premier mode de réalisation précédent, la phase de traitement 11 est mise en oeuvre pour traiter l'image de base (P2) et elle comprend :

- une étape de construction 11-1 d'une carte de normales, représentant des directions normales des points sur au moins une zone de l'image de base ; la carte de normales caractérise la forme d'une zone cible de l'image ; la carte de normales ne comprend pas les informations de la luminance et des couleurs de l'image de base ; pour les besoins de la présente la carte de normales est également appelée image d'identification ;

et la phase d'identification 12 comprend :

- une étape de recherche 12-1 des caractères dans au moins une zone de ladite image d'identification (la carte de normales) ; dans cette phase, les caractères sont identifiés selon la forme caractérisée par la carte de normales de la zone cible ; dans le cas où les caractères sont sur une carte bancaire, cette phase d'identification peut prendre en compte des spécifications connues (par exemple : ISO/IEC 7810 ID-1) de la carte bancaire (la taille de la carte, les emplacements des zones de caractères en reliefs, la police des caractères etc.).

Lorsque le modèle de *Phong* traite des images de références, tel qu'évoqué dans le deuxième mode de réalisation précédent, la phase de traitement 11 comprend :

- la génération, par le modèle de *Phong,* des images de référence de caractères en reliefs selon des conditions d'éclairage différentes ; la sélection d'images de référence, délivrant des images d'identification ; On note également que les images de référence (de synthèse) peuvent être générées à la volée si le dispositif qui met en oeuvre la reconnaissance possède des capacités de calcul suffisantes (plutôt que d'être pré-générées dans des conditions données) ;
et la phase d'identification 12 comprend :
- la comparaison d'au moins certaines portions de l'image de base de la carte bancaire avec au moins certaines des images d'identifications, délivrant une liste d'images d'identification sélectionnées qui correspondent aux caractères dans l'image de base ; et la détermination des caractères dans l'image de base de la carte bancaire à l'aide de la liste des images d'identification.

On décrit ci-dessous en détails les trois phases du procédé selon la technique proposée. On considère que l'image capturée est une photo d'une carte bancaire comprenant des caractères en reliefs (par exemple, un numéro PAN, une date d'expiration et/ou un nom du titulaire).

5.2. Premier mode de réalisation : construction de la carte de normale

### 5.2.1. *Phase de traitement préliminaire*

Le traitement préliminaire de l'image de la carte bancaire comprend les opérations décrites ci-dessous en relation avec les figures 2 et 3 :

- une étape de détection 101 des bords de la carte bancaire ; cette étape peut être réalisée de manières différentes, par exemple, une opération de Flou *Gaussien* (« *Gaussian Blur* » en anglais) suivie un filtrage de *Canny* (détecteur de *Canny*) pour détecter des contours ; les paramètres de l'opération de Flou *Gaussien* et du filtre de *Canny* sont configurés pour réduire le bruit de l'image en fonction de la qualité de l'image ; cette étape de détection délivre une image intermédiaire P1' ;
- une étape de sélection 102 de lignes dans l'image intermédiaire P1' ; cette étape localise les lignes principales dans P1 et sélectionne les lignes les plus « épaisses » sans inclure de polygone déjà identifié ; elle peut être réalisée en utilisation la transformée de *Hough ;*
- une étape de calcul 103 des intersections des lignes précédemment sélectionnées, délivrant quatre coins (C1, C2, C3, C4) de la carte bancaire ;
- une étape de transformation 104 de l'image intermédiaire P1', de sorte que les quatre coins (C1, C2, C3, C4) coïncident avec quatre coins d'un rectangle, délivrant une image de base P2 ; Cette transformation implémente une fonction homographique inverse ;

Le traitement préliminaire décrit ci-dessus peut être réalisé par exemple en utilisant la librairie « *OpenCV* ».
Il convient de noter que la phase de traitement préliminaire n'est pas toujours nécessaire. En effet, lorsque l'image capturée est de bonne qualité (la carte bancaire est sensiblement en forme rectangulaire), il est possible d'exécuter directement la phase de construction de la carte de normales à partir de cette image capturée.

### 5.2.2. *Phase de construction de la carte de normales*

### 5.2.2.1. *Modèle d'illumination de Phong*

La phase de construction repose sur le modèle d'illumination de *Phong.* L'illumination de *Phong* est un modèle local, c'est-à-dire que le calcul se fait en chaque point (pixel) d'une image. Ce modèle empirique permet de calculer de manière crédible la lumière réfléchie par un point étudié. Pour cela, il combine trois éléments : la lumière ambiante, la lumière diffuse et la lumière spéculaire. Le but est de calculer l'intensité lumineuse qui va être émise par réflexion par le point étudié, éclairé par une source supposée ponctuelle, dans une direction précise (celle de l'observateur). Pour cela, la lumière est séparée en trois composantes :

- la composante ambiante représente les parasites provenant d'autre chose que la source considérée, la lumière réfléchie par d'autres points par exemple ; La lumière ambiante est supposée égale en tout point de l'espace ;
- la lumière incidente est réfléchie dans toutes les directions ; La composante diffuse indique l'intensité qui repart en tenant compte de l'inclinaison avec laquelle la lumière arrive sur la surface, mais en supposant que l'intensité est la même quelle que soit la direction que prend le rayon réfléchi ;
- malgré tout, il y a plus de lumière renvoyée dans la direction de la réflexion géométrique (celle dans laquelle repartirait le rayon en arrivant sur un miroir) ; Le rôle de la composante spéculaire est d'en tenir compte.

On définit pour chaque matériau des constantes caractéristiques :

- $k_a \in [0,1]$ est une constante liée à la composante ambiante ;
- $k_d \in [0,1]$ est une constante liée à la composante diffuse dans toutes les directions ;
- $k_s \in [0,1]$ est une constante liée à la composante spéculaire ;
- $\alpha \gg 1$ est une constante liée à la brillance du matériau : plus $\alpha$ est grand, plus la surface est brillante.

On appelle $i_a$, $i_d$ et $i_s$ l'intensité des lumières incidentes ambiante, diffuse et spéculaire. $I_a$, $I_d$ et $I_s$ sont les intensités réfléchies d'un point (pixel) étudié d'une image. $I_P$ est le total des intensités réfléchies de ce point (pixel) étudié.
On définit les vecteurs directeurs suivants : $\hat{L}$ pour la lumière, $\hat{N}$ pour la normale du point étudié à la surface, $\hat{R}$ pour la direction dans la quelle serait réfléchie la lumière sur un miroir, $\hat{V}$ pour la direction de vue de l'observateur.
$\hat{R}$ se déduit par la relation suivante :

$$\hat{R} = 2(\hat{N} \cdot \hat{L})\hat{N} - \hat{L} \qquad (1)$$

Le total des intensités réfléchies d'un point étudié est représenté par l'équation ci-dessous:

$$I_P = I_a + I_\mathrm{d} + I_\mathrm{s} \qquad (2)$$

dans laquelle :

$$I_\mathrm{a} = i_\mathrm{a} \cdot k_a \qquad (3)$$

$$I_\mathrm{d} = i_d \cdot k_d (\hat{L} \cdot \hat{N}) \qquad (4)$$

$$I_\mathrm{s} = i_s k_s (\hat{R} \cdot \hat{V})^\alpha \qquad (5)$$

Pour plusieurs sources lumineuses, on obtient comme formule complète :

$$I_P = i_a k_a + \sum_{m \in \{sources\}} (i_{d,m} k_d (\hat{L}_m \cdot \hat{N}) + i_{s,m} k_s (\hat{R}_m \cdot \hat{V})^\alpha) \qquad (5)$$

Par souci de simplicité, on suppose qu'il y a une seule source de lumière. On obtient ainsi une équation simplifiée du total des densités réfléchies d'un point étudié :

$$I_P = i_a k_a + i_d k_d (\hat{L} \cdot \hat{N}) + i_s k_s (\hat{R} \cdot \hat{V})^\alpha \qquad (6)$$

En utilisant l'équation (5) ou (6), il est possible de prévoir l'apparence (les intensités réfléchies des points sous forme d'une image) des caractères en reliefs selon une condition donnée de lumière (la forme et le matériau des caractères en reliefs sont préalablement connus).

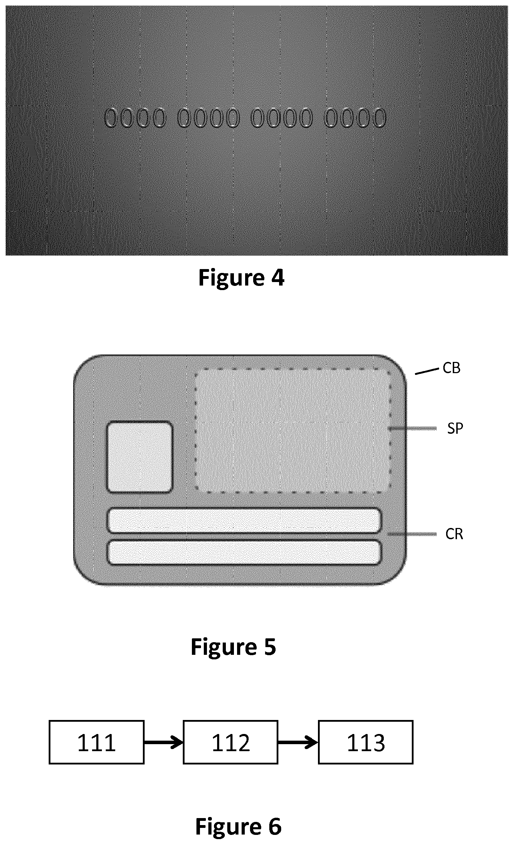

La figure 4 est une image de l'apparence des caractères « 0 » sur une carte bancaire selon une condition donnée de lumière. Cette image est calculée en utilisant l'équation (5). En effet, la forme de la carte bancaire et la forme des caractères sur la carte bancaire respectent les normes connues (cf. ISO/IEC 7812). La normale $\hat{N}$ de chaque point de la carte bancaire est ainsi connue. Les constances caractéristiques $k_a$, $k_d$, $k_s$ et $\alpha$ du matériau de la carte bancaire sont également connues. Les paramètres $i_a$, $i_d$, $i_s$ et $\hat{L}$, $\hat{V}$, $\hat{R}$ sont donnés selon les conditions d'éclairages. Ainsi, le total des densités réfléchies $I_P$ de chaque point sur la carte bancaire peut être calculé. On obtient ainsi l'image de la figure 5 qui regroupe tous les points de la carte bancaire.

Le calcul de cette image peut être réalisé de diverses manières. Le calcul de cette image peut par exemple être réalisé en utilisant des librairies existantes, telle que « *OpenGL* ».

*5.2.2.2. Phase de construction d'une carte de normales*

On détaille ci-dessous, en relation avec les figures 5 et 6, la phase de construction d'une carte de normales.

Le principe général de cette phase de construction consiste à calculer la normale $\hat{N}$ d'un point étudié en utilisant l'équation (5) ou (6). En effet, une fois qu'une image de caractères en reliefs sur une carte bancaire est capturée, la valeur $I_P$ de chaque point (pixel) de l'image est connue. Les constances caractéristiques $k_a$, $k_d$, $k_s$ et $\alpha$ du matériau de la carte bancaire sont également connues (car le matériau de la carte est connu). Les conditions d'éclairage peuvent être déduites en utilisant la valeur $I_P$ d'un point sur une surface plane de l'image de la carte bancaire. La figure 6 illustre une zone ayant une surface plane SP et une zone de caractères en reliefs CR sur une image d'une carte bancaire CB. Les emplacements de la zone ayant une surface plane et de la zone de caractères en reliefs sont connus, car les normes des cartes bancaires sont globalement respectées. Ainsi, il est possible d'identifier 111 la zone ayant une surface plane SP sur une image d'une carte bancaire CB.

Tous les points sur la surface plane SP ont une normale $\hat{N}$ connue qui est perpendiculaire à la surface SP. Les conditions d'éclairage (incluant en particulier le vecteur directeur $\hat{L}$) peuvent ainsi être déterminée 111 en implémentant le modèle d'illumination de *Phong* (l'équation (5) ou (6)) sur un point sur la surface plane SP (la normale $\hat{N}$ du point est connue).

Lorsqu'on analyse un point dans la zone des caractères en reliefs CR, la composante ambiante $i_a k_a$ peut être éliminée en soustrayant la valeur minimale d'intensité lumineuse des points sur la carte bancaire. Si on prend l'équation (6) au départ, on obtient ainsi :

$$I_P - i_a k_a = i_d k_d \left( \hat{L} \cdot \hat{N} \right) + i_s k_s (\hat{R} \cdot \hat{V})^{\alpha}) \qquad (7)$$

La partie à droite de l'équation comprend la composante diffuse ($i_d k_d (\hat{L} \cdot \hat{N})$) et la composante spéculaire ($i_s k_s (\hat{R} \cdot \hat{V})^{\alpha}$). Ces deux composantes dépendent uniquement de la normale $\hat{N}$ (les autres paramètres sont connus). La normale $\hat{N}$, qui correspond le mieux à l'intensité lumineuse de chaque point dans la zone des caractères en reliefs de la carte bancaire, peut être calculée 112 en utilisant des techniques de minimisation standard. Le vecteur directeur de la normale $\hat{N}$ de chaque point dans la zone des caractères en reliefs peut être enregistrée dans une carte de normales P3 (ou d'altitudes).

Selon un autre mode de réalisation, la carte de normales (ou d'altitudes) peut couvrir toute la surface de la carte bancaire (non uniquement sur la zone des caractères en reliefs). Cette carte de normales (ou d'altitudes) caractérise la forme de la surface de la carte bancaire comprenant des caractères en reliefs. Les caractères peuvent ainsi être identifiées à partir de cette carte de normales P3 (ou d'altitudes) dans la phase d'identification décrite dans la section infra.

*5.2.3. Phase d'identification des caractères*

Comme expliqué préalablement, la carte de normales (ou d'altitudes) caractérise la forme des caractères en reliefs sur la carte bancaire. Il est ainsi possible de reconnaître les caractères en utilisation des algorithmes OCR connus permettant d'identifier des caractères à partir d'une carte de normales (ou d'altitudes).

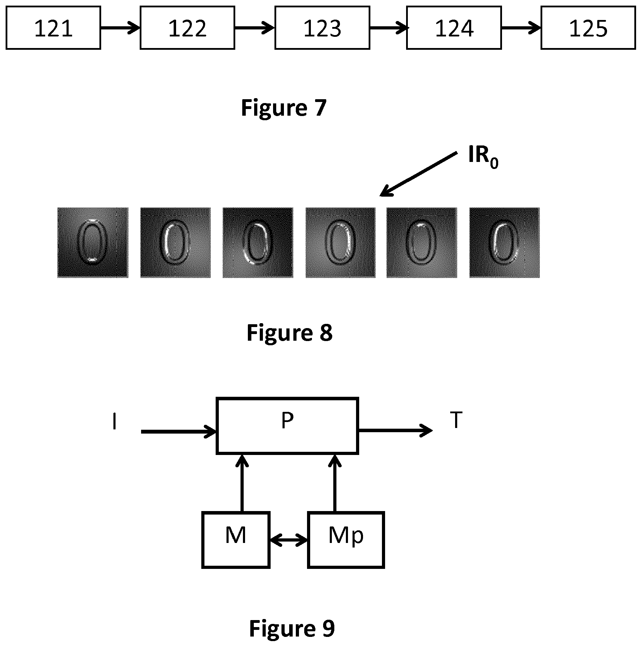

Selon un mode de réalisation de la technique proposée, la phase d'identification des caractères est réalisée en utilisant un algorithme qui exige moins de ressource de calcul. Selon cet algorithme, la phase d'identification des caractères comprend les étapes suivantes (illustré en relation avec la figure 7) :

- sélectionner 121 une zone des caractères en reliefs de la carte bancaire dans la carte de normales (ou d'altitudes), lorsque la carte de normales couvre toute la surface de la carte bancaire ; cette étape peut prendre en compte une géométrie standard connue de la carte bancaire ; si la carte de normales est générée pour une zone des caractères en reliefs, cette étape de sélection pourrait être omise ;
- découper 122 ladite carte de normales, délivrant une liste de sections de ladite carte de normales, chaque section correspondant à un caractère dans la zone des caractères ; en effet, l'emplacement des caractères sur la carte bancaire est connu selon les normes des cartes bancaires : il est ainsi possible de découper la carte de normales selon les spécifications de la norme des cartes bancaires ; en outre, entre deux caractères adjacents en reliefs, il y a normalement une surface plane de largeur prédéterminée : cette surface de largueur prédéterminée peut également être utilisé pour découper les caractères en reliefs ; chaque section peut avoir une taille de n pixels en largeur et m pixel en hauteur ; selon un mode de réalisation particulier, chaque section est en forme carrée ayant une taille de n pixels en largeur et n pixels en hauteur ;

- construction 123 d'une liste de vecteurs courants à partir de ladite liste de sections, chaque vecteur courant correspondant à une section ; chaque vecteur est ainsi de $n \times m$ dimensions ou de $n^2$ dimensions lorsque les sections sont en forme carrée ;

- comparaison 124 desdits vecteurs courants avec une liste de vecteurs modèles préalablement construite à partir de cartes de normales de caractères en reliefs connus, chaque vecteur modèle correspondant à un caractère en relief connu ; les vecteurs courants et les vecteurs modèles sont de mêmes dimensions $n \times m$ ou $n \times n$. Les vecteurs modèles correspondent aux cartes des normales des caractères en reliefs sur une carte bancaire standard ; les caractères comprennent généralement les lettres majuscules A-Z, les chiffres 0-9 ; ainsi, une liste essentielle peut comprendre les vecteurs modèles des caractères décrits ci-dessus ; cette liste essentielle de vecteurs modèles peut être présentée comme {*V0, V1, ..., V9, VA, ..., VZ*} ; La liste peut également comprendre les vecteurs modèle des signes de ponctuation («.», «,», etc.) et/ou les lettre minuscules a-z ; chaque vecteur courant peut être comparé avec tous les vecteurs dans la liste de vecteurs modèles afin de déterminer un vecteur modèle le plus proche du vecteur courant (ayant une distance minimale avec le vecteur courant) ; il convient de noter que la liste des vecteurs modèles peut être construite préalablement et stockée dans une mémoire, et que la comparaison peut être effectuée sur les différents modèles en parallèle et indépendamment pour chaque modèle ;

- détermination 125 une liste de caractères courants correspondant à ladite liste de vecteurs courants ; le caractère représenté par le vecteur modèle le plus proche d'un vecteur courant peut être considéré comme le caractère représenté par le vecteur courant : on obtient ainsi une liste de caractères représentés par les vecteurs courants.

Les caractères identifiés peuvent par la suite être utilisés pour remplir automatiquement des zones de saisie d'un formulaire affiché sur un écran ; cette manière de faire permet à l'utilisateur de vérifier que la phase de reconnaissance s'est correctement déroulée. Les caractères reconnus peuvent être utilisés dans diverses applications comme par exemple le paiement en ligne. Dans ce cas, d'autres opérations peuvent être menées postérieurement à la reconnaissance des caractères afin de s'assurer que les données reconnues sont correctes.

Ainsi, par exemple, les caractères en reliefs affichés sur une carte bancaire comprennent normalement un numéro de la carte (e.g. numéro PAN « *Primary Account Number* » en anglais) dont la validité apparente peut être vérifiée, par la formule de *Luhn* qui est également connue comme étant l'algorithme « modulo 10 ». Il s'agit d'une formule de somme de contrôle (Checksum) utilisée pour valider les numéros des cartes bancaires. Ainsi, la phase d'identification des caractères du numéro de carte bancaire peut comprendre une étape de vérification du numéro de la carte bancaire à l'aide de cet algorithme « modulo 10 ». Si le numéro détecté n'est pas valide, une nouvelle étape de comparaison peut être exécutée. Dans cette nouvelle étape de comparaison, on identifie, pour chaque vecteur courant, un vecteur modèle qui est par exemple le deuxième le plus proche du vecteur courant (le vecteur modèle qui a une distance le deuxième le plus petite avec le vecteur courant). Par les vecteurs modèles identifiés, on sélectionne celui qui a une distance le plus petite avec son vecteur courant correspondant. Le chiffre représenté par le vecteur modèle sélectionné replace le chiffre correspondant dans le numéro non-valide de la carte bancaire.

Selon un autre mode de réalisation de la technique proposée, dans l'étape de comparaison, chaque vecteur courant est comparé avec tous les vecteurs dans la liste de vecteurs modèles. Les premiers deux ou trois vecteurs modèles qui sont plus proches du vecteur courant (ayant les distances les plus petites avec le vecteur courant) peuvent être sélectionnés. Ainsi, on obtient deux ou trois vecteurs modèles pour chaque vecteur courant. En d'autres termes, chaque vecteur courant peut probablement représenter un des deux ou trois chiffres représentés par les deux ou trois vecteurs modèles. Dans l'étape de détermination, les chiffres d'un numéro de la carte bancaire sont déterminés selon deux critères :

- le numéro est valide selon la formule de *luhn* ; et
- les vecteurs modèles représentant les chiffres du numéro ont une distance totale minimale.

La fiabilité du procédé est ainsi améliorée.

5.3. Deuxième mode de réalisation : Génération d'images de référence (de synthèse) et reconnaissance des caractères en reliefs

Les sections précédentes décrivent la construction d'une carte de normales et l'identification des caractères en reliefs à partir de la carte de normales.

Dans un autre mode de réalisation de la technique proposée, il n'est pas nécessaire de reconstruire la carte de normales. Les caractères en relief sur l'image de base peuvent être identifiés selon un procédé de reconnaissance des caractères en reliefs spécifique. Dans ce mode de réalisation, on utilise des modèles de caractères, préalablement éclairés, selon des conditions d'éclairage prédéterminées (par exemple une quarantaine de conditions d'éclairage). On dispose donc, pour chaque caractère, d'une série d'images modèles de ce caractère, chaque image modèle correspondant à une condition d'éclairage particulière. Ces images modèles sont appelées images de références ($IR_{xx}$). La figure 7 illustre six images de référence du chiffre « 0 » ($IR_0$) en relief restituées selon des conditions d'éclairage différentes. En effet, les images de référence sont restituées selon le modèle d'illumination de *Phong* décrit précédemment, car les formes des caractères en reliefs sur une carte bancaire sont connues (les normales $\hat{N}$ sont connues). Ainsi, un caractère en relief peut correspondre à une pluralité d'images de référence selon différentes conditions d'éclairage. Les images des caractères (0-9, A-Z, a-z, et caractères spéciaux) restituées selon une condition d'éclairage donnée constituent un ensemble d'images de référence ($EIR_{xx}$). Par exemple, il est possible de générer quarante ensembles d'images de référence, selon quarante conditions d'éclairage de référence, et ce pour chaque caractère (0-9, A-Z, a-z, et caractères spéciaux). Ces ensembles d'images de références sont ensuite sauvegardés dans une mémoire où ils pourront être lus ou téléchargés ou obtenus d'une quelconque manière afin d'être comparés à des caractères de l'image de base, selon le procédé décrit par la suite.

Ce procédé de reconnaissance comprend les étapes suivantes :

- obtention des images de référence de caractères en reliefs selon des conditions d'éclairage différentes ; les caractères peuvent comprend les chiffres 0-9, les lettres majuscules A-Z, les lettres minuscules a-z et/ou des caractères spéciaux ; en fonction de ce que l'on souhaite reconnaître ; l'obtention de ces images de référence peut comprendre la lecture de celles-ci dans une mémoire prédéterminée ou bien le téléchargement de celles-ci au travers d'un réseau de communication, en fonction des modes de réalisation ;
- comparaison d'au moins certaines portions de l'image de base de la carte bancaire avec au moins certaines des images de référence des caractères selon au moins une condition d'éclairages, délivrant une liste d'images de référence sélectionnées : les images de référence sélectionnées appartiennent (idéalement) à un même ensemble d'images de référence selon une condition d'éclairage identique ; en outre, elles sont supposées correspondre le mieux aux images de base des caractères ; les images de référence sélectionnées sont appelées des images d'identification et constituent un sous ensemble des ensembles d'images de référence ;
- une étape de détermination des caractères courants dans l'image de base de la carte bancaire à l'aide de la liste des images d'identification.

Selon un mode de réalisation particulier, le procédé peut comprendre, postérieurement à l'étape d'obtention, une étape de détermination d'une condition d'éclairage de l'image de base de la carte bancaire. Un exemple de détermination d'une condition d'éclairage à l'aide d'une surface plane de la carte bancaire est décrit en détail supra.

Une fois que la condition d'éclairage de l'image de base est déterminée, le procédé comprend une étape de filtrage des ensembles d'images de référence afin de ne sélectionner, parmi les ensembles d'images de référence existants, qu'un nombre réduit d'ensembles, correspondants aux conditions d'éclairage de l'image de base. Idéalement, un seul ensemble d'images de référence est sélectionné, constituant l'ensemble d'images d'identification. Dans ce cas, un caractère reconnu sur la carte bancaire correspond à une seule image d'identification de l'ensemble d'images d'identification : la liste d'images d'identification est ainsi constituée d'un unique ensemble d'images de référence. L'étape de détermination des caractères est facilitée, car le nombre des images d'identification est largement réduit *(il y a un seul ensemble d'images d'identification).*

En complément, la formule de *Luhn* peut aussi être utilisée pour vérifier la validité du numéro de la carte bancaire. En effet, les caractères en reliefs sur la carte bancaire comprennent nécessairement les chiffres d'un numéro de la carte bancaire.

On note également que les images de référence (de synthèse) peuvent être générées à la volée si l'appareil (sur lequel la reconnaissance est mise en oeuvre) possède des capacités de calcul suffisantes. Un intérêt de cette variante est qu'elle offre un compromis entre les capacités de stockage (il n'y a plus besoin de stocker N modèles à l'avance, N étant potentiellement très grand) et calcul (il faut désormais calculer les images dont on a besoin). L'autre intérêt de cette variante est qu'on peut déterminer plus finement les conditions d'éclairage, par une méthode d'optimisation telle que Expectation-Maximisation. Concrètement : L'algorithme minimise, tour à tour, l'erreur sur l'éclairage (mesurée en comparant avec la zone non embossée de la carte) et l'erreur sur la lecture de caractères (mesurée en comparant l'image de référence et la zone embossée, éventuellement avec pénalisation si le code Luhn est incorrect).

5.4. Dispositif de reconnaissance de caractères en relief

On présente en relation avec la figure 9, une structure simplifiée d'un dispositif de reconnaissance de caractères en reliefs mettant en oeuvre le procédé selon un mode de réalisation de la technique proposée. Seuls les principaux éléments relatifs à la mise en oeuvre du procédé sont illustrés.

Le dispositif comprend un mémoire M comprenant une mémoire tampon, une unité de traitement P équipée par exemple d'un microprocesseur et pilotée par une application ou un programme d'ordinateur Mp mettant en oeuvre le procédé de reconnaissance de caractères en reliefs selon un mode de réalisation de la technique proposée.

À l'initialisation, les instructions de code du programme d'ordinateur Mp sont par exemple chargées dans une mémoire RAM avant d'être exécutées par le processeur de l'unité de traitement P. L'unité de traitement P reçoit en entrée un signal émis par un émetteur. Le microprocesseur de l'unité de traitement P met en oeuvre le procédé de reconnaissance de caractères en relief, selon les instructions du programme d'ordinateur Mp.

De préférence, le dispositif comprend une caméra permettant de capturer une image d'un objet (par exemple une carte bancaire) comprenant des caractères en reliefs. L'unité de traitement du dispositif peut par la suite exécuter les instructions du programme d'ordinateur pour mettre en oeuvre le procédé de reconnaissance des caractères. Le dispositif (avec ou sans caméra) peut comprendre un module de communication filière (USB, Ethernet, etc.) ou sans fils (Wifi, Bluetooth®, etc.) pour recevoir une image d'une carte bancaire en provenance d'un autre dispositif électronique (une caméra, un ordinateur, un serveur etc.).

Les exemples de réalisation exposés précédemment ne le sont bien évidemment qu'à titre indicatif. L'homme du métier est en mesure de comprendre les avantages procurés par la présente technique et notamment les avantages procurés par le procédé de reconnaissance de caractères en reliefs. Il est clair qu'un tel procédé peut être utilisé dans d'autres contextes sans sortir du cadre de la présente technique.

**Revendications**

1. Procédé de reconnaissance de caractères, mis en oeuvre par l'intermédiaire d'un dispositif électronique, comportant une étape de reconnaissance, dans une image représentative d'un objet comprenant au moins un caractère en relief, dite image de base, d'au moins un caractère en relief de ladite image de base, le procédé comprenant :

   - une phase de traitement (11) d'au moins une image, ladite phase comprenant au moins une mise en oeuvre d'un modèle réflectif de *Phong* et délivrant au moins une image d'identification (P3, IRx) ;
   - une phase d'identification (12) de caractères en fonction de l'image de base et de ladite au moins une image d'identification, comprenant une étape de reconnaissance des caractères de l'image de base à l'aide de de ladite au moins une image d'identification ; **caractérisé en ce que** ladite phase de traitement (11) de ladite au moins une image comprend une étape de construction d'une carte de normales, représentant des normales des points sur au moins une zone de l'image de base, délivrant ladite image d'identification, l'étape de construction comprenant :
   - une étape d'identification d'une zone plane sur ladite image de base ;
   - une étape de détermination d'une condition d'éclairage à partir d'une intensité lumineuse d'un pixel ou d'un groupe de pixels sur la zone plane ;
   - une étape de calcul de normales desdits points de ladite au moins une zone selon la condition d'éclairage déterminée.

2. Procédé selon la revendication 1, **caractérisé en ce que**, ladite phase de traitement (11) de la dite au moins une image comprend une étape de génération, préalable ou à la demande, par le modèle de *Phong,* des images modèles de caractères en reliefs selon une pluralité de conditions d'éclairage prédéterminées, délivrant une pluralité d'ensembles d'images de référence ;
   et **en ce que** la dite phase d'identification (12) comprend :

   - une étape de comparaison d'au moins certaines portions de l'image de base avec au moins certaines des images de référence, délivrant une liste d'images de référence sélectionnées, dite liste d'images d'identification, qui correspondent aux caractères dans l'image de base ; et
   - une étape de reconnaissance des caractères de l'image de base à l'aide de la liste d'images d'identification.

3. Procédé selon la revendication 1, **caractérisé en ce que** les caractères en reliefs sont situés sur une carte bancaire dans ladite image de base.

4. Procédé selon la revendication 3, **caractérisé en ce qu'**il comprend une phase de traitement préliminaire d'une image de la carte bancaire capturée par une caméra, délivrant ladite image de base.

5. Procédé selon la revendication 4, **caractérisé en ce que** ladite phase de traitement préliminaire comprend les étapes suivantes :

- détection de bords de la carte bancaire, délivrant une image intermédiaire P1'
- sélection de lignes dans l'image intermédiaire P1' ;
- calcul des intersections des lignes, délivrant quatre coins (C1, C2, C3, C4) de la carte bancaire ; et
- transformation de l'image intermédiaire P1', de sorte que les quatre coins (C1, C2, C3, C4) coïncident avec quatre coins d'un rectangle, délivrant ladite image de base.

6. Procédé selon la revendication 5, **caractérisé en ce que** l'étape de détermination et l'étape de calcul utilisent l'équation ci-dessous selon le modèle d'illumination de *Phong :*

$$I_P = k_a i_a + \sum_m (k_d \left(\hat{L}_m \cdot \hat{N}\right) i_{m,d} + k_s (\hat{R}_m \cdot \hat{V})^\alpha i_{m,s})$$

dans laquelle :

- $k_a \in [0,1]$ est une constante liée à la composante ambiante ;
- $k_d \in [0,1]$ est une constante liée à la composante diffuse ;
- $k_s \in [0,1]$ est une constante liée à la composante spéculaire ;
- $\alpha \gg 1$ est une constante liée à la brillance du matériau ;
- m est le nombre de sources lumières ;
- $I_P$ représente une intensité réfléchie totale sur un point donnée ;
- $\hat{L}$ est un vecteur directeur de la lumière ;
- $\hat{N}$ est un vecteur directeur de la normale à la surface ;
- $\hat{R}$ est un vecteur directeur de la direction dans la quelle serait réfléchie la lumière sur un miroir, $\hat{R} = 2(\hat{L} \cdot \hat{N})\hat{N} - \hat{L}$.

7. Procédé selon la revendication 1, **caractérisé en ce que** ladite phase d'identification desdites caractères comprend :

- une étape de découpage de ladite carte de normales, délivrant une liste de sections de ladite carte de normales, chaque section correspondant à un caractère dans ladite au moins une zone ;
- une étape de construction d'une liste de vecteurs courants à partir de ladite liste de sections, chaque vecteur courant représentant une section ;
- une étape de comparaison desdits vecteurs courants avec une liste de vecteurs modèles préalablement construite à partir des cartographes normales des caractères connus, chaque vecteur modèle correspondant à un caractère connu ;
- une étape de détermination d'une liste de caractères courants correspondant à ladite liste de vecteurs courants.

8. Procédé selon la revendication 7, **caractérisé en ce que** lesdits vecteurs courants et lesdits vecteurs modèle sont de $m \times n$ en dimensions, chacun desdits cartes de normales des caractères connus ayant une taille de $m \times n$ pixels.

9. Procédé selon la revendication 7, **caractérisé en ce que** ladite au moins une zone comprend une zone d'un numéro d'une carte bancaire, et **en ce que** ladite liste de caractères courants comprend ledit numéro de ladite carte bancaire.

10. Procédé selon la revendication 9, **caractérisé en ce qu'**il comprend en outre une étape de vérification dudit numéro de ladite carte bancaire selon la formule de *Luhn.*

11. Dispositif électronique de reconnaissance de caractères en relief dans une image de base, **caractérise en ce qu'**il comprend une unité de traitement configuré pour implémenter l'un quelconque des procédés selon les revendications 1 à 10.

12. Produit programme d'ordinateur, comprenant des instructions de code de programme pour la mise en oeuvre du procédé selon l'un quelconque des revendications 1 à 10, lorsque ledit programme est exécuté sur un ordinateur.

**Patentansprüche**

1.  Verfahren zum Erkennen von Zeichen, Verfahren, das durch ein elektronisches Gerät umgesetzt wird, umfassend einen Schritt des Erkennens in einem Bild, das für einen Gegenstand repräsentativ ist, umfassend mindestens ein reliefartig hervorstehendes Zeichen, das Grundbild genannt wird, von mindestens einem reliefartig hervorstehenden Zeichen des Grundbildes,
    wobei das Verfahren aufweist:

    - eine Verarbeitungsphase (11) von mindestens einem Bild, wobei die Phase mindestens ein Umzusetzen eines reflektierenden *Phong*-Modells aufweist und mindestens ein Identifizierungsbild (P3, IRx) bereitstellt,
    - eine Identifikationsphase (12) von Zeichen in Abhängigkeit von dem Grundbild und von dem mindestens einen Identifizierungsbild, umfassend einen Schritt des Erkennens der Zeichen des Grundbildes mit Hilfe von dem mindestens einen Identifizierungsbild,

    **dadurch gekennzeichnet, dass** die Verarbeitungsphase (11) des mindestens einen Bildes einen Schritt des Erstellens einer Karte von Normalen aufweist, die die Normalen der Punkte auf mindestens einem Bereich des Grundbildes darstellt, die das Identifizierungsbild bereitstellt, wobei der Schritt des Erstellens aufweist:

    - einen Schritt des Identifizieren eines ebenen Bereichs auf dem Grundbild,
    - einen Schritt des Bestimmens einer Beleuchtungsbedingung ausgehend von einer Lichtintensität eines Pixels oder einer Gruppe von Pixeln auf dem ebenen Bereich,
    - einen Schritt des Berechnens von Normalen der Punkte des mindestens einen Bereichs gemäß der bestimmten Beleuchtungsbedingung.

2.  Verfahren nach Anspruch 1, **dadurch gekennzeichnet, dass** die Verarbeitungsphase (11) des mindestens einen Bildes einen Schritt des Erzeugens von Modellbildern von reliefartig hervorstehenden Zeichen vorher oder auf Anfrage durch das *Phong*-Modell gemäß mehrerer vorbestimmter Beleuchtungsbedingungen aufweist, wodurch mehrere Sätzen von Referenzbildern bereitgestellt werden,
    und dadurch, dass die Identifikationsphase (12) aufweist:

    - einen Schritt des Vergleichens von mindestens einigen Abschnitten des Grundbildes mit mindestens einigen der Referenzbilder, der eine Liste ausgewählter Referenzbilder bereitstellt, die Identifizierungsbildliste genannt wird, die den Zeichen in dem Grundbild entspricht, und
    - einen Schritt des Erkennens der Zeichen des Grundbildes mit Hilfe der Identifizierungsbildliste.

3.  Verfahren nach Anspruch 1, **dadurch gekennzeichnet, dass** sich die reliefartig hervorstehenden Zeichen auf einer Bankkarte in dem Grundbild befinden.

4.  Verfahren nach Anspruch 3, **dadurch gekennzeichnet, dass** es eine vorläufige Bearbeitungsphase eines Bildes der Bankkarte, das von einer Kamera aufgenommenen wird, aufweist, die das Grundbild bereitstellt.

5.  Verfahren nach Anspruch 4, **dadurch gekennzeichnet, dass** die vorläufige Bearbeitungsphase die folgenden Schritte aufweist:

    - Erfassen der Kanten der Bankkarte, wodurch ein Zwischenbild P1' bereitgestellt wird,
    - Auswählen von Zeilen im Zwischenbild P1',
    - Berechnen der Schnittpunkte der Linien, wodurch vier Ecken (C1, C2, C3, C4) der Bankkarte bereitgestellt werden, und
    - Umwandeln des Zwischenbildes P1' derart, dass die vier Ecken (C1, C2, C3, C4) mit vier Ecken eines Rechtecks zusammenfallen, wodurch das Grundbild bereitgestellt wird.

6.  Verfahren nach Anspruch 5, **dadurch gekennzeichnet, dass** der Schritt des Bestimmens und der Schritt des Berechnens die nachstehende Gleichung gemäß dem *Phong*-Beleuchtungsmodell verwenden:

$$I_P = k_a i_a + \sum_m (k_d (\hat{L}_m \cdot \hat{N}) i_{m,d} + k_s (\hat{R}_m \cdot \hat{V})^\alpha i_{m,s})$$

worin:

- $k_a \in [0,1]$ eine Konstante ist, die mit der ambienten Komponente verbunden ist,
- $k_d \in [0,1]$ eine Konstante ist, die mit der diffusen Komponente verbunden ist,
- $k_s \in [0,1]$ eine Konstante ist, die mit der spiegelnden Komponente verbunden ist,
- $\alpha \gg 1$ eine Konstante ist, die mit dem Glanz des Materials verbunden ist,
- m die Anzahl der Lichtquellen ist,
- $I_P$ eine reflektierte Gesamtintensität an einem bestimmten Punkt darstellt,
- $\hat{L}$ ein Richtungsvektor des Lichts ist,
- $\hat{N}$ ein Richtungsvektor der Normalen auf die Oberfläche ist,
- $\hat{R}$ ein Richtungsvektor der Richtung ist, in die das Licht auf einem Spiegel reflektiert worden wäre, $\hat{R} = 2(\hat{L} \cdot \hat{N})\hat{N} - \hat{L}$.

7. Verfahren nach Anspruch 1, **dadurch gekennzeichnet, dass** die Identifikationsphase der Zeichen aufweist:

- einen Schritt des Zerschneidens der Karte von Normalen, der eine Liste von Abschnitten der Karte von Normalen bereitstellt, wobei jeder Abschnitt einem Zeichen in dem mindestens einen Bereich entspricht,
- einen Schritt des Erstellens einer Liste von aktuellen Vektoren aus der Liste von Abschnitten, wobei jeder aktuelle Vektor einen Abschnitt darstellt,
- einen Schritt des Vergleichens der aktuellen Vektoren mit einer Liste von Modellvektoren, die zuvor aus den Karten von Normalen bekannter Zeichen erstellt werden, wobei jeder Modellvektor einem bekannten Zeichen entspricht,
- einen Schritt des Bestimmens einer Liste von aktuellen Zeichen, die der Liste von aktuellen Vektoren entspricht.

8. Verfahren nach Anspruch 7, **dadurch gekennzeichnet, dass** die aktuellen Vektoren und die Modellvektoren die Abmessungen m $\times$ n aufweisen, wobei jede der Karten von Normalen der bekannten Zeichen eine Größe von m $\times$ n Pixeln aufweist.

9. Verfahren nach Anspruch 7, **dadurch gekennzeichnet, dass** der mindestens eine Bereich einen Bereich mit einer Nummer einer Bankkarte aufweist und dass die Liste der aktuellen Zeichen die Nummer der Bankkarte aufweist.

10. Verfahren nach Anspruch 9, **dadurch gekennzeichnet, dass** es ferner einen Schritt zum Überprüfen der Nummer der Bankkarte gemäß der *Luhn*-Formel aufweist.

11. Elektronisches Gerät zum Erkennen von reliefartig hervorstehenden Zeichen in einem Grundbild, **dadurch gekennzeichnet, dass** es eine Verarbeitungseinheit aufweist, die konfiguriert ist, um eines der Verfahren nach den Ansprüchen 1 bis 10 umzusetzen.

12. Computerprogrammprodukt, umfassend Programmcodebefehle für das Umsetzen des Verfahrens nach einem der Ansprüche 1 bis 10, wenn das Programm auf einem Computer ausgeführt wird.

**Claims**

1. Method of character recognition, method implemented by means of an electronic device, method comprising a step of recognition, in an image representing an object comprising at least one raised character, called a basic image, of at least one raised character of said basic image, said method comprising:

- a phase (11) for processing at least one image, said phase comprising at least one implementation of a *Phong* reflection model and delivering at least one identification image (P3, IRx) ;
- a phase (12) for identifying characters as a function of the basic image and said at least one identification image, comprising a step of recognition of characters of said basic image with said at least one identification image;

wherein said phase (11) for processing said at least one image comprises a step for building a normal map, representing normals of dots on at least one zone of the basic image delivering said identification image and wherein the step for building comprises:

- a step for identifying a flat zone of said bank card on said basic image;
- a step for determining a lighting condition from a light intensity of a pixel or a group of pixels on the flat zone of the bank card;
- a step for computing normals of said dots of said at least one zone according to the determined lighting condition.

2. Method according to claim 1, wherein, said phase (11) for processing said at least one image comprises a step for the generation by the *Phong* module, preliminarily or on request, of model images of raised characters in a plurality of pre-determined lighting conditions delivering a plurality of sets of reference images;
and in that said phase (12) for identifying comprises:

- a step for comparing at least certain portions of the basic image with at least certain of the reference images, delivering a list of selected reference images, called a list of identification images, that correspond to the characters in the basic image; and
- a step for recognizing characters in the basic image of the bank card using the list of identification images.

3. Method according to claim 1, wherein the raised characters are situated on a bank card in said basic image.

4. Method according to claim 3, wherein it comprises a phase of preliminary processing of an image of the bank card captured by a camera, delivering said basic image.

5. Method according to claim 4, wherein said phase of preliminary processing comprises the following steps:

- detecting edges of the bank card, delivering an intermediate image P1'
- selecting lines in the intermediate image P1' ;
- computing the intersections of the lines, delivering four corners (C1, C2, C3, C4) of the bank card; and
- converting the intermediate image P1', so that the four corners (C1, C2, C3, C4) coincide with four corners of a rectangle, delivering said basic image.

6. Method according to claim 1, wherein the step for determining and the step for computing use the following equation according to the *Phong* illumination model:

$$I_P = k_a i_a + \sum_m (k_d \left( \hat{L}_m \cdot \hat{N} \right) i_{m,d} + k_s (\hat{R}_m \cdot \hat{V})^\alpha i_{m,s})$$

where:

- $k_a \in [0,1]$ is a constant related to the ambient component;
- $k_d \in [0,1]$ is a constant related to the scattered component;
- $k_s \in [0,1]$ is a constant related to specular component;
- $\alpha \gg 1$ is a constant related to the brilliance of the material;
- m is the number of light sources;
- $I_P$ represents a total reflected intensity at a given point;
- $\hat{L}$ is a director vector of light;
- $\hat{N}$ is a director vector of the surface normal;
- $\hat{R}$ is a director vector of the direction in which light would be reflected on a mirror, $\hat{R} = 2(\hat{L} \cdot \hat{N})\hat{N} - \hat{L}$.

7. Method according to claim 1, wherein said phase for identifying said characters comprises:

- a step for sub-dividing said normal map, delivering a list of sections of said normal map, each section corresponding to a character in said at least one zone;
- a step for building a list of current vectors from said list of sections, each current vector representing a section;
- a step for comparing said current vectors with a list of model vectors preliminarily built on the basis of normal mappings of the known characters, each model vector corresponding to a known character;

- a step for determining a list of current characters corresponding to said list of current vectors.

8. Method according to claim 7, wherein said current vector and said model vectors have m × n dimensions, each of said normal maps of the known characters having a size of m × $n$ pixels.

9. Method according to claim 7, wherein said at least one zone comprises a zone of a card number of said bank card and in that said list of current characters comprises said card number of said bank card.

10. Method according to claim 9, wherein it comprises furthermore comprises a step for verifying said card number of said bank card according to *Luhn's* formula.

11. Electronic device for the recognition of raised characters in a basic image, wherein it comprises a processing unit, configured to implement any one of the methods according to claims 1 to 10.

12. Computer program product, comprising program code instructions to implement the method according to any one of the claims 1 to 10, when said program is executed on a computer.

**Figure 1**

**Figure 2**

**Figure 3**

**Figure 4**

**Figure 5**

| 111 | → | 112 | → | 113 |

**Figure 6**

**EP 3 291 141 B1**

**Figure 7**

**Figure 8**

**Figure 9**

20

## RÉFÉRENCES CITÉES DANS LA DESCRIPTION

**Littérature non-brevet citée dans la description**

- Contrast enhancement for images of raised characters on region of interest. **JIANMEI LI et al.** INTELLIGENT CONTROL AND AUTOMATION (WCICA), 2010 8TH WORLD CONGRESS ON. IEEE, 07 Juillet 2010, 6258-6261